# EUROPEAN PATENT SPECIFICATION

(11) **EP 0 519 961 B1**
(45) Date of publication and mention of the grant of the patent: **17.08.1994**
(21) Application number: 91905630.9
(22) Date of filing: 07.03.1991
(51) Int. Cl.: G01D 5/34

(54) **TRANSDUCER PARTICULARLY FOR MECHANICAL METERS**
GEBER, INSBESONDERE FÜR MECHANISCHE ZÄHLER
TRANSDUCTEUR, EN PARTICULIER POUR LES COMPTEURS A ACTION MECANIQUE

(30) Priority: 16.03.1990 IT 1970290
(43) Date of publication of application: 30.12.1992
(73) Proprietor: FABBRICHE RIUNITE MISURATORI SACOFGAS S.p.A, I-20141 Milan (IT)
(72) Inventor: CALACE, Antonio, I-20146 Milano (IT)
(74) Representative: Dr. Ing. A. Racheli & C. S.r.l.
(86) International application number: IT9100020
(87) International publication number: WO9114155

(56) References cited:
- DE-A- 2 211 093
- DE-A- 2 940 673
- US-A- 4 654 522

## Description

The present invention refers to a measuring transducer operating on the basis of the angular position of a set of revolving mechanical elements, or drums, making up part of a meter for measuring fluids, such as gas, or electricity.

Transducers in use at present for the above purposes, which are suitable, for instance, to allow digital reading of the numerical indication of the meter, comprise a set of codifying disks, each one associated to a respective drum of the meter, and having a series of slots positioned according to a predetermined binary code.

The reading of the angular position of such codifying disks, which are normally of the absolute type, takes place by positioning, in correspondence to one face of each disk, a set of emitter elements of the luminous type, for example, to each one of which a corresponding receiver is associated, for example a photodiode, in correspondence to the other face of the disk. The number of emitters and receivers depends on the type of code used and on the number of divisions foreseen on the periphery of each drum, and may be, for example, four in number for decadal drums.

These known reading systems (see for example EP-A-0 205 779), precisely because they have many sources of energy, can give rise to mistakes in reading, since it is enough for one single emitter element to be desactivated for any reason whatsoever, to cause false angular reading data.

DE-A- 2 211 093 discloses a transducer for measuring the angular positions of revolving elements, wherein only one light source is placed between at least two codifying disks and activates two receivers, no more than one thereof being associated to a single disk, by means of lenses which concentrate the light bundle. The codifying disks are of the incremental type and the system needs a continuous feeding.

One aim of the invention is that of eliminating the above-mentioned risk of a wrong reading, or at any rate reducing it to a minimum.

Another aim of the invention is to simplify the structure of the transducer device and of the reading means, with consequent reduction in costs.

Another aim is to realize a code which will be simple to carry out on the codifying disks, and which will be easily readable, without the possibility of errors.

These aimes are achieved by means of the characteristics listed in the attached claim 1.

Advantageous embodiments of the invention are described in the dependent claims.

According to the invention, if a source of light were to be desactivated, it would not allow the reading of the codifying disk or disks associated to it, thus eliminating the risks of a false reading.

According to a particularly advantageous embodiment of the invention, the codifying disks consist of the same decadal drums of the meter, with appropriate slots according to a predetermined binary code.

Further characteristics of the invention will be made clearer by the detailed description which follows, referring to one of its purely exemplary and therefore not restrictive embodiments, illustrated in the appended drawings, in which:
- figure 1: is a partially sectional schematic front view of a meter with the transducer device according to the invention;
- figure 2: is a schematic transverse section, taken for example along the line II-II in figure 1;
- figures 3 and 4: are similar views to figure 2 and show, respectively, a codified drum and the detector-carrier element associated to it.

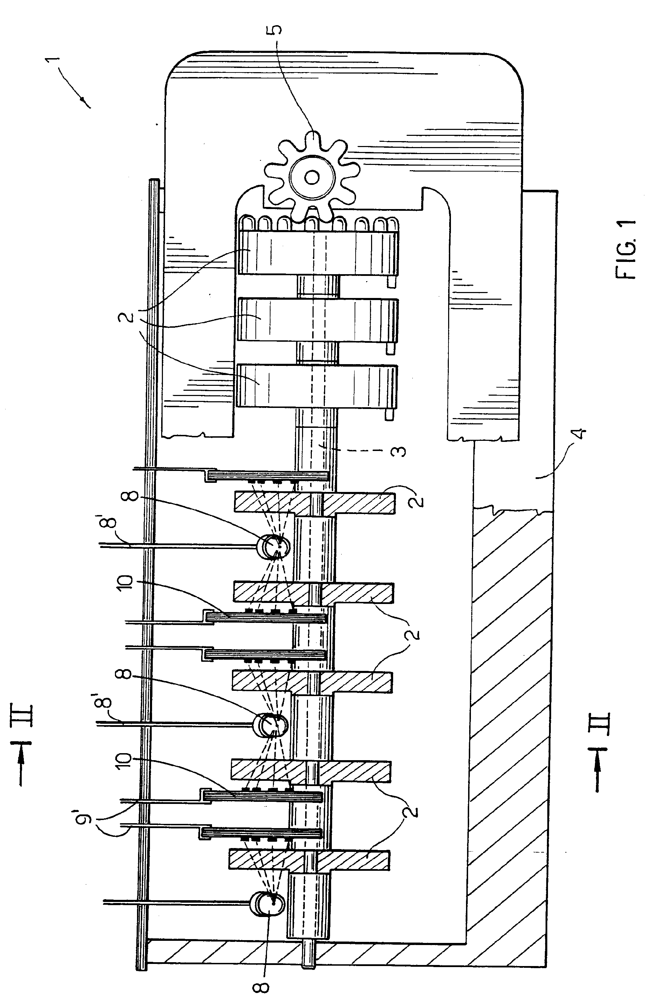

In figure 1 a meter 1 is illustrated consisting of a set of revolving elements or drums 2, which can have the numeration from 0 to 9 on their peripheral outline, as shown for the first three drums, going from right to left in figure 1. The drums 2 are coaxial and positioned on the same one shaft 3, supported by two opposed side walls of a container 4.

The drums 2, in a way that is already known, are coupled together by means of gears, not shown in the appended figures, in such a way that to each complete revolution of a drum a portion of a revolution of the immediately following drum (a tenth of a revolution in the case of decadal drums) corresponds.

The first drum 2 is set revolving by an entrainment pinion 5, connected in turn to a group of gears which can be set revolving by the passing of a fluid, for example a gas, inside a duct. Therefore the number of revolutions shown by the meter is correlated with the quantity of fluid which has passed in the duct.

The reading of the consumption of the gas can take place by means of visual reading directly on the meter 1, when all the decadal drums are provided with respective numerations from 0 to 9 on their periphery, and/or by means of electronic reading, using a transducer device, as in the case of the present invention.

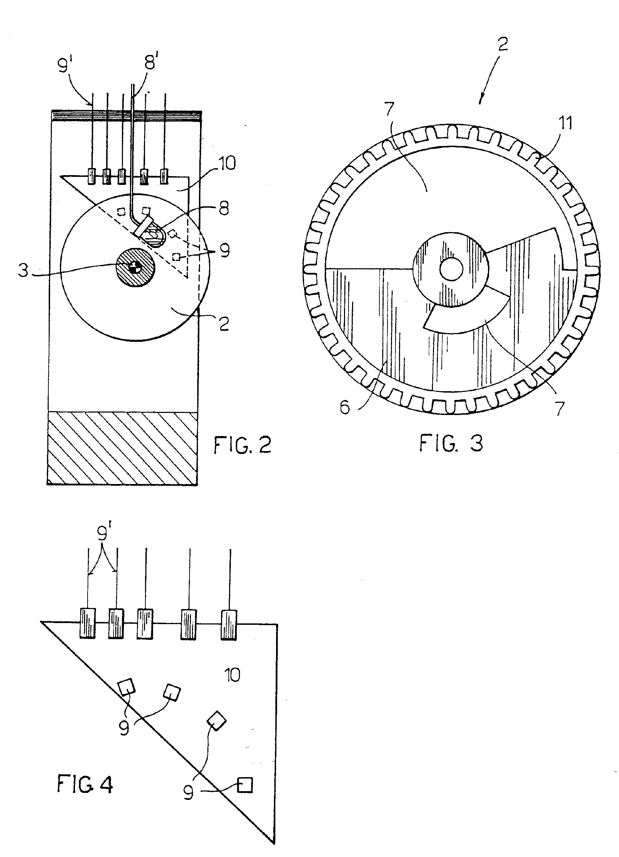

In accordance with the invention, the drums 2, as can be seen in detail in figure 3, have solid parts 6 and slots 7, thus acting as codifying disks. The codification takes place according to a 4 bit binary code, only one of the 4 changing state when passing from one digit to the next.

Between each pair of codifying disks 2, which are of the absolute type, as is shown in figure 1, only one radiant source is situated, in such a way as to radiate on the opposing surface of such a pair of disks at the same time, and is therefore capable of activating all the detecting means, shown with reference number 9 in the appended figure, associated to such a pair of disks.

The detector elements 9 associated to each drum 2 are borne on a respective support 10, which is shown in figures 2 and 4 with a triangular outline, only for the sake of example. The arrangement of the detector elements 9 can also vary with respect to the one shown in such figures. In the appended figures reference numbers 8′ and 9′ indicate the electrical connections of the emitters 8 and 9 respectively.

Each emitter 8 is preferably a light radiator, particularly a normal, coherent or infra-red light photodiode, and the corresponding detector elements 9 are receiver photodiods.

As shown in figure 3, a gear wheel 11 can be foreseen on each drum 2, possibly with a multiplication ratio, suitable to activate a second codifying disk acting as a vernier, not illustrated in the appended drawings.

## Claims

1. A transducer for measuring the angular positions of a set of mechanical revolving elements or drums (2) in a meter (1) for metering consumption of fluids, particularly gas, or of electricity, comprising:
- a set of codifying disks (2) of the absolute type associated with at least some of the drums of said meter;
- associated to each disk, emitter means (8) and receiver means (9), placed on respective sides of each disk for reading the code representing the angular position of that disk, the receiver means consisting of a plurality of receivers
characterized in that
- the emitter means (8) associated to each disk (2) comprises a single emitter arranged such as to be able to activate all the receivers (9) associated with the disk.

2. A transducer according to claim 1, wherein the codifying disks (2) are arranged in pairs with the single emitter being located between the two disks of each pair such as to be able to activate all the receivers (9) associated with both disks.

3. A transducer according to claim 1 or 2, wherein the said emitter or emitters (8) are normal, coherent or infra-red light photodiods, and the said receiver means (9) are corresponding phototransistor receivers.

4. A transducer according to any one of the claims from 1 to 3, characterized in that all the receiver means (9) associated to a codifying disk are borne by a support plate (10), for example with a triangular outline.

5. A transducer according to any one of the previous claims, in which each codifying disk has opaque parts (6) and transparent parts (7), arranged according to a predetermined binary code, of such a kind that only one of the receiver means (9) associated to one same codifying disk changes state, for each quantified angular portion of the disk.

6. A transducer according to any one of the previous claims, characterized in that a respective second codifying disk, acting as a vernier, is associated to at least some of the codifying disks (2).

7. A meter for measuring fluids, in particular gases, or electricity, comprising a plurality of mechanical revolving elements or drums (2) and a transducer according to any one of the preceding claims, characterized in that said drums (2) are the codifying disks of the transducer and have slots (7) and solid parts (6) placed along a predetermined binary code.

## Patentansprüche

1. Geber zum Messen der Winkellagen eines Satzes von mechanisch umlaufenden Bauteilen oder Trommeln (2) in einem Zähler (1) zum Messen des Verbrauchs von flüssigen Mittel, insbesondere Gas, oder Elektrizität, umfassend:
- einen Satz von Kodifizier-Scheiben (2) vom absoluten Typ, vereinigt mit mindestens einigen Trommeln des Zählers,
- Sender-Einrichtungen (8) und Empfänger-Einrichtungen (9), vereinigt mit jeder Scheibe, an jeweiligen Seiten jeder Scheibe angeordnet, zum Lesen der Kode welcher die Winkelposition dieser Scheibe darstellt, wobei die Empfänger-Einrichtung aus einer Mehrzahl von Empfängern besteht,
dadurch gekennzeichnet:
- dass die mit einer jenen Scheibe (2) vereinigte Sender-Einrichtung (8) einen einzelnen Sender besitzt, der derart angeordnet ist, dass er fähig ist sämtliche mit der Scheibe vereinigten Empfänger (9) zu aktivieren.

2. Geber nach Anspruch 1, wobei die Kodifizier-Scheiben (2) paarweise angeordnet sind, und der einzelne Sender (8) zwischen den zwei Scheiben eines jeden Paars angeordnet ist derart, um fähig zu sein, sämtliche, mit beiden Scheiben vereinigten Empfänger (9) zu aktivieren.

3. Geber nach Anspruch 1 oder 2, wobei der oder die Sender (8) Fotodioden mit normalem kohärentem oder infrarotem Licht sind, und die Empfänger-Einrichtungen (9) entsprechende Phototransistor-Empfänger sind.

4. Geber nach einem der Ansprüche 1 bis 3, dadurch gekennzeichnet, dass sämtliche zu einer Kodifizier-Scheibe vereinigten Empfänger-Einrichtungen (9) von einer Trägerplatte (10) getragen sind, zum Beispiel mit einem dreieckförmigen Umriss.

5. Geber nach einem der vorhergehenden Ansprüche, wobei jede Kodifizier-Scheibe nicht durchscheinende Teile (6) und transparente Teile (7) besitzt, die gemäss einem vorgebenen Binärkode angeordnet sind, derart, dass nur eine der Empfänger-Einrichtungen (9) die mit ein und derselben Kodifizier-Scheibe vereinigt ist, für jede quantifizierte Winkelportion der Scheibe den Zustand wechselt.

6. Geber nach einem der vorhergehenden Ansprüche, dadurch gekennzeichnet, dass eine entsprechende, zweite Kodifizier-Scheibe, die als Feineinsteller wirkt, mit wenigstens einigen der Kodifizier-Scheiben (2) vereinigt ist.

7. Zähler zum Messen von flüssigen Mittel, insbesondere Gas, oder Elektrizität, umfassend eine Mehrzahl von mechanisch umlaufenden Bauteilen oder Trommeln (2) und einem Geber gemäss einem der vorhergehenden Ansprüche, dadurch gekennzeichnet, dass die Trommeln (2) die Kodifizier-Scheiben des Gebers sind und Öffnungen (7) und feste Teile (6) besitzen die entlang einem vorgebenen Binärkode angeordnet sind.

## Revendications

1. Transducteur pour mesurer les positions angulaires d'un jeu d'éléments rotatifs mécaniques ou tambours (2) dans un compteur (1) pour mesurer la consommation de fluides, en particulier de gaz, ou d'électricité, comportant:
- un jeu de disques de codification (2), du type à mesure absolue, associé au moins à certains des tambours dudit compteur;
- associés à chaque disque, des moyens formant émetteur (8) et des moyens formant récepteur (9), disposés sur les côtés respectifs de chaque disque pour lire le code représentant la position angulaire de ce disque, les moyens formant récepteur étant composés d'une pluralité de récepteurs,
caractérisés en ce que,
- les moyens formant émetteur (8) associés à chaque disque (2), comportent un émetteur unique configuré de façon à être susceptible d'activer tous les récepteurs (9) associés au disque.

2. Transducteur selon la revendication 1, dans lequel les disques de codification (2) sont disposés par paires avec l'émetteur unique situé entre les deux disques de chaque paire, de façon à être susceptible d'activer tous les récepteurs (9) associés avec les deux disques.

3. Transducteur selon la revendication 1 ou 2, dans lequel ledit émetteur ou lesdits émetteurs (8) sont des photodiodes à lumière normale, cohérente ou infra-rouge, et lesdits moyens formant récepteur (9) sont des récepteurs à phototransistors correspondants.

4. Transducteur selon l'une quelconque des revendications 1 à 3, caractérisé en ce que tous les moyens formant récepteur (9) associés à un disque de codification sont supportés par une plaque de support (10) ayant par exemple un contour triangulaire.

5. Transducteur selon l'une quelconque des revendications précédentes, dans lequel chaque disque de codification possède des parties opaques (6) et des parties transparentes (7), disposées selon un code binaire prédéterminé, d'un type tel que seul l'un des moyens formant récepteur (9) associés au même disque de codification change d'état, pour chaque partie angulaire quantifiée du disque.

6. Transducteur selon l'une quelconque des revendications précédentes, caractérisé en ce qu'un deuxième disque de codification respectif, agissant comme un vernier, est associé à au moins certains des disques de codification (2).

7. Compteur pour mesurer des fluides, en particulier des gaz, ou de l'électricité, comportant une pluralité d'éléments rotatifs mécaniques ou tambours (2) et un transducteur selon l'une quelconque des revendications précédentes, caractérisé en ce que lesdits tambours (2) sont les disques de codification du transducteur et possèdent des encoches (7) et des parties pleines (6) disposées selon un code binaire prédéterminé.
